Europäisches Patentamt

European Patent Office

Office européen des brevets

(11) Veröffentlichungsnummer: **0 638 742 A1**

# EUROPÄISCHE PATENTANMELDUNG

(21) Anmeldenummer: 93112973.8

(22) Anmeldetag: **12.08.93**

(51) Int. Cl.6: **F16H 61/02**, B60K 41/28

(43) Veröffentlichungstag der Anmeldung:
**15.02.95 Patentblatt 95/07**

(84) Benannte Vertragsstaaten:
**AT BE CH DE DK ES FR GB GR IE IT LI LU MC NL PT SE**

(71) Anmelder: **SIEMENS AKTIENGESELLSCHAFT**
**Wittelsbacherplatz 2**
**D-80333 München (DE)**

(72) Erfinder: **Graf, Friedrich, Dipl.-Ing.**
**Amselweg 5**
**D-93059 Regensburg (DE)**

(54) **Steuerung für eine Einrichtung in einem Kraftfahrzeug, insbesondere für ein automatisches Getriebe.**

(57) Die Steuerung kann in einem Kraftfahrzeug zum Steuern eines automatisches Getriebe, eines Radschlupfregelgerätes, einer Hinterradlenkung, einer aktiven Radaufhängung usw. dienen. In Abhängigkeit von der Stellung des Fahrpedals, von der Fahrzeuggeschwindigkeit und ggf. weiterer Sensorsignale wird eine Stellgröße (z.B. Gang_neu) für die zu steuernde Einrichtung festgelegt. Die Steuerung weist einen Fuzzy-Rechner 23 auf, dem die genannten Meßgrößen und von diesen abgeleitete Parameter (Fahrpedalaktivität, Mittelwerte der Fahrpedal- oder der Drosselklappenstellung) als Eingangsgrößen zugeführt werden und durch den anhand einer Auswertung der Eingangsgrößen nach den Regeln der Fuzzy-Logik eine Ausgangsvariable (last, fahrer, schaltung) erzeugt wird. Durch diese Ausgangsvariablen werden bei der Festlegung der Stellgröße die jeweilige Fahr- und Belastungssituation des Kraftfahrzeugs und der Fahrstil des Fahrers berücksichtigt.

FIG 2

Die Erfindung betrifft eine Steuerung gemäß dem Oberbegriff von Patentanspruch 1. Eine solche Steuerung kann in einem Kraftfahrzeug zum Beispiel zum Steuern eines automatischen Getriebes, einer Hinterradlenkung, einer Antischlupfregelung oder eines Fahrgeschwindigkeitsreglers verwendet werden.

Bei bekannten Getriebesteuerungen für Kraftfahrzeuge wird die Übersetzung des Getriebes in Abhängigkeit von der Fahrpedalstellung und von der Fahrgeschwindigkeit anhand von abgespeicherten Kennfeldern automatisch eingestellt. Dabei werden außerdem der Lastzustand des Kraftfahrzeugs und der Fahrstil des Fahrers berücksichtigt (EP-A 0 471 102, DE-C 33 41 652).

Bei einer anderen automatischen Getriebesteuerung wird von einem Grundkennfeld auf ein Sonderkennfeld umgeschaltet, wenn das Kraftfahrzeug durch schmale Straßen in Wohngebieten fährt (EP-B 0 339 462). Dieser Fahrzustand wird angenommen, wenn ein rechnerisch ermittelter sogenannter Korrelations-Koeffizient einen Grenzwert überschreitet. Das Sonderkennfeld hält dann den zweiten Gang fest und verhindert häufige Wechsel zwischen dem ersten und dem zweiten Gang. Der Korrelations-Koeffizient berücksichtigt den Umfang der Lenkbewegungen und die Anzahl der Bremsbetätigungen in einer bestimmten Zeit. Der zusätzliche Aufwand für eine beschränkte Aufgabe ist recht groß.

Bei weiteren bekannten automatischen Getriebesteuerungen (US-A 4 841 815, A. Takahashi, Method of Predicting Driving Environment, IFSA 1991, Brüssel, S. 203 bis 206) erfolgt die Auswahl des jeweils zu schaltenden Ganges durch Steuerungen, die nach den Methoden der Fuzzy-Logik arbeiten. Mit dieser Logik wird Expertenwissen, das durch Erfahrung gewonnen worden ist, in Form von sogenannten Regelbasen beschrieben und damit für die Regel- oder Steuervorgänge des Kraftfahrzeug-Getriebes verwendet. Bei einer derartigen Steuerung (EP-A 0 375 155) wird mit einer Vielzahl von Fuzzy-Regeln angestrebt, das Verhalten eines automatischen Getriebes an das Verhalten eines von einem erfahrenen Fahrers bedienten handgeschalteten Getriebes anzupassen.

Um eine Steueraufgabe möglichst optimal zu lösen, kann es aber zweckmäßig sein, zusätzliche Einflußgrößen, die das Verhalten der zu steuernden Einrichtung beeinflussen können, bei der Ermittlung der Stellgröße zu berücksichtigen. Dies sind die neben dem jeweiligen Fahrstil des Fahrers und dem Lastzustand des Kraftfahrzeugs (Höhe der Beladung, zu befahrende Steigungen) vor allem die Art der von dem Kraftfahrzeug befahrenen Straße. Unter dem Begriff Straßenart oder dem Straßentyp, den das Kraftfahrzeug jeweils befährt, wird hier unterschieden, ob es sich um eine Stadtstraße, eine Landstraße oder eine Autobahn handelt, ob die Straße eher gerade oder ob sie kurvenreich ist und ob sie eben oder bergig ist, d.h. viele Steigungen und Gefälle aufweist. Dies sind alles Größen, die die Steuerungsaufgaben im Kraftfahrzeug beeinflussen und die zu berücksichtigen sind, wenn ein komfortabler und kraftstoffsparender und damit umweltfreundlicher Betrieb des Kraftfahrzeugs erreicht werden soll.

Der Erfindung liegt die Aufgabe zugrunde, eine Steuerung zu schaffen, die bei der Festlegung von Stellgrößen für zu steuernde Einrichtungen im Kraftfahrzeug möglichst alle Größen berücksichtigt, die für ein komfortables und umweltverträgliches Fahrverhalten des Kraftfahrzeugs von Bedeutung sind.

Diese Aufgabe wird erfindungsgemäß durch eine Steuerung nach Anspruch 1 gelöst. Vorteilhafte Weiterbildungen der Erfindung sind in den Unteransprüchen niedergelegt.

Die Vorteile der Erfindung liegen insbesondere in dem geringen Zusatzaufwand den sie erfordert. Es können alle Schaltungsbestandteile und Sensorsignale verwendet werden, die bei modernen Getriebesteuerungen in der Regel ohnehin vorhanden sind (vgl. z.B. die ältere Patentanmeldung EP 92111076.3; unser Zeichen GR 92 P 1373 E). Darüber hinaus sind keine weiteren Sensoren erforderlich, es müssen nur einige zusätzliche Signale von den Sensorsignalen abgeleitet und ausgewertet werden.

Ausführungsbeispiele der Erfindung werden im folgenden anhand der Zeichnungen erläutert. Es zeigen:

| | |
|---|---|
| Figur 1 | die wesentlichen Bestandteile eines Kraftfahrzeugs mit einer erfindungsgemäßen Steuerung in einer Ausführung als Getriebesteuerung, in schematischer Darstellung, |
| Figur 2 | die mit einem Fuzzy-Rechner versehene Getriebesteuerung von Figur 1 als Blockdiagramm, |
| Figur 3 | ein Beispiel eines Schaltkennfeldes der Getriebesteuerung nach Figur 2, |
| Figur 4 | eine in der Getriebesteuerung nach Figur 2 für die Schaltkennfeld-Auswahl verwendete Matrix, |
| Figur 5 | ein Ablaufdiagramm für die Schaltkennfeld-Auswahl, |
| Figur 6 | eine Tabelle, die Bedingungen für die Zulassung von Schaltungen durch Wechsel des Schaltkennfeldes enthält, |
| Figur 7 | eine Tabelle, die Schaltungsunterdrückungen aufgrund von Schaltverboten der Fuzzy-Logik enthält. |
| Figur 8 bis 10 | die Zugehörigkeitsfunktionen einiger in der Getriebesteuerung nach Figur 2 verwendeten Fuzzy-Variablen, |
| Figur 9 bis 13 | dreidimensionale Darstellungen der Zusammenhänge zwischen den Eingangs- und |

den Ausgangssignalen des Fuzzy-Rechners als Ergebnis der Wirksamkeit von Fuzzy-Regeln.

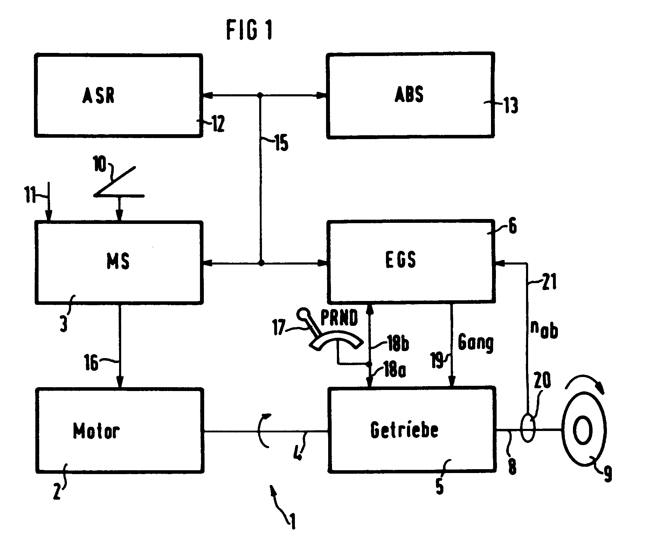

Ein schematisch dargestelltes Kraftfahrzeug 1 (Figur 1) weist einen Motor 2 auf, der von einer Motorsteuerung 3 gesteuert wird. Eine Motorabtriebswelle 4 ist über einen bekannten und deshalb hier nicht getrennt dargestellten Drehmomentwandler mit einem automatischen Getriebe 5 verbunden, das von einer erfindungsgemäßen elektronischen Steuerung 6 gesteuert wird. Im nachfolgenden Ausführungsbeispiel ist das Getriebe 5 als Stufengetriebe ausgeführt, eine erfindungsgemäße Steuerung 6, läßt sich aber genauso gut für ein stufenloses Getriebe verwenden. Eine Getriebeabtriebswelle 8 ist mit der angetriebenen Achse des Kraftfahrzeugs verbunden, die hier durch ein angetriebenes Rad 9 symbolisiert wird.

Über ein Fahrpedal 10 gibt der Fahrer des Kraftfahrzeugs seine Befehle - genaugenommen sind es seine Wünsche - an die Motorsteuerung 3. Bei Betätigung des - hier nicht dargestellten - Bremspedals des Kraftfahrzeugs gelangt ein, z.B. von dem Bremslichtschalter erzeugtes, Bremssignal über eine Leitung 11 zu der Motorsteuerung 3. Das Kraftfahrzeug ist außerdem mit einer Radschlupf- oder Antischlupfregelung (ASR) 12 und einem Antiblockiersystem (ABS) 13 versehen, die durch Signalleitungen 15 untereinander sowie mit der Motorsteuerung 3 und der Getriebesteuerung 6 zwecks Austausch von Signalen verbunden sind. Über eine Signalleitung 16 sendet die Motorsteuerung 3 an den Motor 2 Signale, mit denen die Zündung, die Einspritzung und die Drosselklappe gesteuert werden, (letztere nur, wenn eine entsprechende Steuereinrichtung vorhanden ist).

Über einen Wählhebel 17 bestimmt der Fahrer in üblicher Weise den Fahrbereich des automatischen Getriebes 5. Die Wählhebelsignale gelangen über eine mechanische Verbindung 18a zu dem Getriebe 5 und über eine elektrische Signalleitung 18b zu der Steuerung 6. Die Steuerung 6 sendet über eine Signalleitung 19 Steuersignale an das Getriebe 5, die den jeweiligen Getriebegang festlegen und die erforderlichen Schaltvorgänge steuern, oder - bei einem stufenlosen Getriebe - die jeweilige Übersetzung einstellen. Die Drehzahl der Getriebeabtriebswelle 8 wird von einem Drehzahlsensor 20 über eine Signalleitung 21 an die Steuerung 6 gemeldet. Zumindest die Signalleitungen 15, die die Steuergeräte 3, 6, 12 und 13 miteinander verbinden, können aus einzelnen Signalleitungen oder aus einem bidirektionalen Bus, z.B. aus einem bekannten CAN- oder LAN-Bus, bestehen. Die Steuergeräte und -systeme 3, 12 und 13 müssen nicht vorhanden sein. Falls sie es aber sind, ist es von Vorteil, wenn die Getriebesteuerung 6 auf die von ihnen gelieferten Sensorsignale (z.B. für die Raddrehzahlen) und davon abgeleitete Größen zugreifen kann.

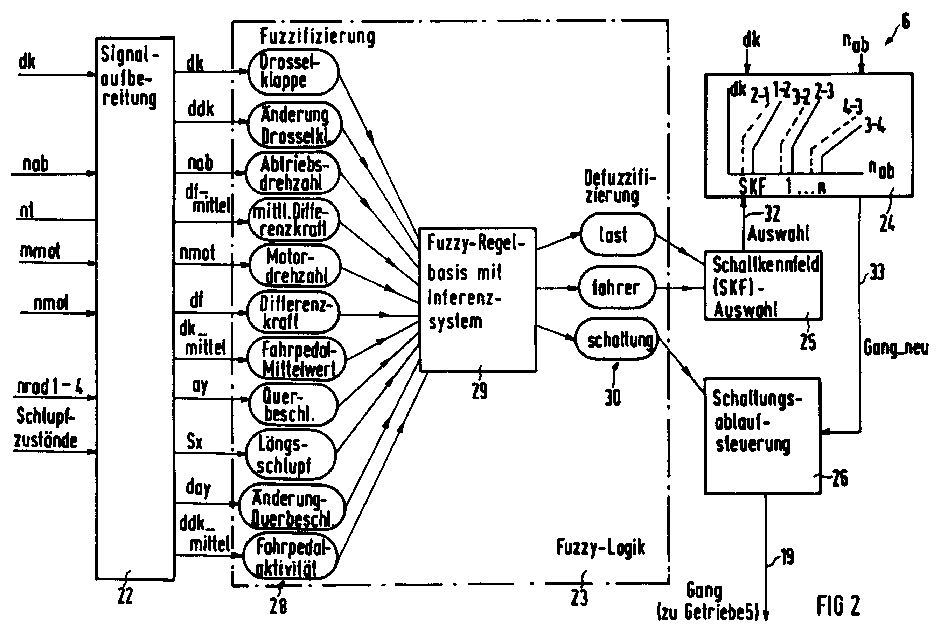

Die elektronische Steuerung 6 (Figur 2) weist folgende Bestandteile auf: eine Signalaufbereitungsschaltung (im folgenden abgekürzt: Signalaufbereitung) 22, eine Fuzzy-Logik-Steuerschaltung (im folgenden: Fuzzy-Rechner) 23, einen Kennfeldspeicher 24 mit mehreren Schaltkennfeldern oder Getriebeübersetzungs-Tabellen, eine Schaltkennfeld-Auswahlschaltung (kurz: SKF-Auswahl) 25 und eine Schaltungsablaufsteuerung 26.

In der Signalaufbereitung 22 werden mehrere Eingangssignale aufbereitet, die von verschiedenen Sensoren oder von den erwähnten weiteren Steuergeräten geliefert werden. Die Eingangssignale werden dabei in von der Fuzzy-Logik 23 verarbeitbare charakteristische Größen gewandelt. Auf den in Figur 2 angedeuteten Eingangsleitungen gelangen (von oben nach unten) folgende Meßwerte oder Parameter zu der Signalaufbereitung 22: der sich in der Stellung der Drosselklappe oder allgemein des Fahrpedals niederschlagende Fahrerwunsch dk; die Getriebe-Abtriebsdrehzahl nab, die Turbinendrehzahl nt des Drehmomentwandlers; das Motordrehmoment mmot; die Motordrehzahl nmot; die Raddrehzahlen nrad1-4; und Schlupfzustands-Signale ("Schlupfzustände"). Diese Schlupfzustände können - alternativ zu einer Ermittlung aus den Raddrehzahlen - auch von der Radschlupfregelung 12 oder von dem Antiblockiersystem 13 geliefert werden. Die Steuerung 6 verfügt somit auch über Betriebsparameter oder Sensorsignale anderer Steuergeräte, falls solche vorhanden sind.

Fuzzy-Steuerungen als solche sind in der Literatur beschrieben (D. Abel: Fuzzy control - eine Einführung ins Unscharfe, AT 39 (1991) Heft 12). Durch die Fuzzifizierung werden die exakt bestimmten (englisch: crisp) Größen der Eingangsparameter in linguistische Variablen abgebildet. Nachfolgend werden in dem Inferenzsystem die in Form einer sog. Regelbasis abgelegten linguistischen Regeln abgearbeitet und es wird eine unscharf formulierte Stellgröße bestimmt. In diesen Regeln (siehe Beispiele weiter hinten) ist das gewünschte Systemverhalten festgelegt. Die durch Inferenz bestimmte Stellgröße wird durch die Defuzzifizierung in eine physikalische Stellgröße - allgemein: "scharfe" Information - umgesetzt, die dann den zu steuernden Prozeß direkt beeinflußt.

Die in der Signalaufbereitung 22 (Figur 2) in logische Größen umgewandelten Meßwerte und abgeleiteten Größen gelangen über aus der Zeichnung ersichtliche Leitungen zu dem Fuzzifizierer 28 des Reglers 23 und werden dort in linguistische Variablen umgesetzt und an das die Fuzzy-Regelbasis enthaltende Inferenzsystem 29 übermittelt. Mit den in der Regelbasis definierten Regeln wird der Lastzustand des Kraftfahrzeugs berechnet, eine Fahrererkennung durchgeführt, d.h. bestimmt, ob das Fahrverhalten des

3

Fahrers sportlich oder verbrauchsorientiert ist, und schließlich festgelegt, ob eine Hoch- der eine Rückschaltung erlaubt oder verboten ist. Der Fuzzy-Rechner enthält fundiertes Expertenwissen und nutzt es zur Berechnung von Parametern, die zum Festlegen der von der Steuerung zu liefernden Stellgröße entscheidend sind.

Das Inferenzsystem 29 erzeugt entsprechend drei Signale "last", "fahrer" und "schaltung", die in dem Defuzzifizierer in physikalische Stellgrößen umgewandelt werden und als Ausgangssignale des Fuzzy-Rechners 23 das Schalten des automatischen Getriebes steuern. Das "last"- und das "fahrer"-Signal werden in der Schaltkennfeld-Auswahl miteinander verknüpft und ergeben ein Auswahlsignal, das über eine Signalleitung 32 zu dem Kennfeldspeicher 24 gelangt und dort das in dem jeweiligen Fall günstigste Schaltkennfeld auswählt. Eingangssignale des Kennfeldspeichers 24 sind der Fahrerwunsch (Drosselklappenstellung dk) und die Getriebeabtriebsdrehzahl nab. Überschreitet der durch diese Signale festgelegte Betriebszustand des Kraftfahrzeugs eine Kennlinie 2-1, 1-2,..., 4-3 oder 3-4, so wird ein Signal "Gang_neu" erzeugt, das den neuen Gang festlegt und über eine Signalleitung 33 an die Schaltungsablaufsteuerung 26 übermittelt wird. Die Kennlinie 1-2 verbindet in bekannter Weise die Punkte, bei deren Überschreiten von dem ersten in den zweiten Gang hochgeschaltet, die Kennlinie 2-1 die Punkte, bei deren Unterschreiten von dem zweiten in den ersten Gang zurückgeschaltet wird, usw.

Falls das Signal "Gang_neu" in der Schaltungsablaufsteuerung 26 nicht in den noch zu erläuternden Fällen durch das Signal "schaltung" gesperrt wird, wird es über die Signalleitung 20 an das Getriebe 5 weitergeleitet und bewirkt dort das Schalten in den neuen Gang.

Das Signal "last" ist ein Maß für extern bedingte Lastzustände in Form einer erhöhten Fahrzeugbeladung und/oder des Befahrens einer Steigung oder eines Gefälles, und aus ihm resultiert das Erfordernis, das Schaltverhalten oder die Übersetzung des Getriebes an den neuen Lastzustand anzupassen. Das Signal "fahrer" beschreibt die Fahrweise des Fahrers, die indirekt aber auch durch extern bedingte Umstände wie Typ der Fahrstrecke (Stadt, Landstraße, Autobahn) beeinflußt sein kann. Beide Signale bewirken die Auswahl jeweils geeigneter Schaltkennfelder "SKF1 bis SKFn" in dem Kennfeldspeicher 24. Dazu existieren unterschiedliche Möglichkeiten. Im Ausführungsbeispiel werden beim Über- oder Unterschreiten scharfer Grenzen für die Signale geeignete Schaltkennfelder selektiert. Dabei hat die Anpassung an die externen Lastzustände Vorrang vor der Anpassung an den Fahrstil. Eine andere Möglichkeit besteht darin, Schaltkennlinien aus einzelnen Schaltkennfeldern ganz oder teilweise zu verschieben.

Das auch anhand eines Schaltkennfelds gewonnene Signal "Gang_neu" wird der Schaltungsablaufsteuerung zugeführt. In dieser kann der Fuzzy-Rechner mit dem Signal "schaltung" aktiv eingreifen und bestimmte Schaltungsarten unterdrücken (eine Hoch- oder Rückschaltung) oder jede Schaltung verhindern. Mit dem Signal "schaltung" werden Schaltvorgänge, die sich aus den Schaltkennfeldern ergeben, dynamisch korrigiert. Ein Beispiel ist die schnelle Kurvenfahrt. Bei einem ausschließlichen Festlegen des Schaltverhaltens durch Kennfelder wird häufig beim Kurveneinlauf, wenn der Fahrer vom Gas geht, hochgeschaltet und beim Kurvenauslauf, wenn der Fahrer wieder Gas gibt, zurückgeschaltet. Diese die Fahrstabilität und den Fahrkomfort beeinträchtigenden und den Verschleiß fördernden Schaltvorgänge werden hier aber verhindert. Ein anderes Beispiel sind Schlupfzustände zwischen den Rädern des Kraftfahrzeugs und der Fahrbahn: der Fuzzy-Rechner 23 vermeidet oder verzögert in der Schaltungsablaufsteuerung 26 Schaltungen, die die Fahrstabilität zusätzlich negativ beeinträchtigen könnten. Darüber hinaus bewirkt die Schaltungsablaufsteuerung 26, wenn sie eine Schaltung zuläßt, ein derartiges Ansteuern der elektro-hydraulischen Aktuatoren in dem Getriebe 5, daß die Gangwechsel schonend und komfortabel erfolgen.

Die verbesserte Fahrstabilität und der erhöhte Fahrkomfort werden durch das in der Fuzzy-Regelbasis enthaltene Expertenwissen erreicht, die Überschaubarkeit und Anpassungsfähigkeit der Getriebesteuerung wird durch die Verwendung von Schaltkennfeldern gewährleistet. Bei der Erstellung der Schaltkennfelder sind viele Informationen eingearbeitet worden, z.B. die Momentenreserve im neuen Gang, der Kraftstoffverbrauch usw.), die damit der Getriebesteuerung unmittelbar zur Verfügung stehen. Diese wird dadurch von der sehr aufwendigen Berechnung dieser Informationen entlastet. Unzulässig hohe oder niedrige Motordrehzahlen werden sicher verhindert. Der FuzzyRechner 23 wird mit Hilfe eines im Handel erhältlichen sog. CAE-Tools als Programm in der höheren Programmiersprache C oder direkt als Objektcode erstellt. Neben dieser Ausführung als auf einem Mikrorechner ablaufenden Programmen kann der Controller 23 genau so gut in Hardware als Peripherieeinheit eines Rechnersystems realisiert werden.

In der Signalaufbereitung 22 werden aus den Eingangssignalen auch abgeleitete Größen berechnet: Eine Fahrpedal-Verstellgeschwindigkeit ddk wird als gleitender Mittelwert (moving average) des Betrags der Änderung des zyklisch abgetasteten Wertes der Verstellgeschwindigkeit berechnet, wobei der jeweils letzte Wert, z.B. mit 80% und der neueste Wert mit 20% gewichtet werden.

4

Ein Fahrpedal-Mittelwert dk__mittel stellt den Mittelwert über einen vorgegebenen Zeitraum des durch die Drosselklappenstellung gegebenen Fahrerwunsches dk dar und wird zur Berechnung des Fahrstils herangezogen, und zwar in einer Regelbasis RB__Fahrer. Dieser Mittelwert wird folgendermaßen berechnet:

dk__mittel,n = (Σdk,n - dk__mittel,n-1) / p

hierin sind:

Σdk,n = dk * K + Σdk,n-1 ,

p die Anzahl der Berechnungszyklen, bis nach einer sprunghaften Änderung von dk ein neuer Mittelwert erreicht ist (z.B. p = 256), und

k ein Normierungsfaktor zur Bewertung des aktuellen dk-Wertes ist. Dabei ist k > 1 und n stellt den n-ten Berechnungszyklus dar.

Die Fahrzeug-Querbeschleunigung ay wird aus den von Drehzahlsensoren gelieferten Radgeschwindigkeiten wie folgt berechnet:

$$ay = \frac{(vvr - vvl) * (vvl + vvr)}{2b}$$

wobei

b = die Spurweite an der nicht angetriebenen Achse,
vvl = die Radgeschwindigkeit vorne links und
vvr = die Radgeschwindigkeit vorne rechts (jeweils bei Heck- oder Allradantrieb; bei Frontantrieb werden die hinteren Radgeschwindigkeiten eingesetzt)

sind. Die Radgeschwindigkeiten werden aus den gemessenen Raddrehzahlen berechnet.

Die vorstehende Berechnung der Querbeschleunigung ay ist nur dann korrekt, wenn keine signifikanten Schlupfzustände vorliegen. Da aber im Fall von Schlupfzuständen andere Regeln höher priorisiert sind als der Einfluß der Querbeschleunigung, so wirkt sich der Verlust der Aktualität von ay nicht aus, wenn ay bei Vorhandensein von Schlupf auf einen Ersatzwert gesetzt wird.

Eine andere abgeleitete Größe ist die Differenzkraft *df*, die sich folgendermaßen berechnen läßt:

$$df = F_b(t) - F_L(t) - F_R(t) - m_{Fzg} * \frac{d}{dt} n_{ab}(t) - F_{br}(t)$$

hierin sind:

$F_b(t)$ = die Antriebskraft
$F_L(t)$ = der Luftwiderstand
$F_R(t)$ = der Rollwiderstand
$m_{Fzg} * \Delta n_{ab}(t)$ = der Beschleunigungswiderstand und
$F_{br}(t)$ = die Bremskraft

*df* stellt die Kraftbilanz der auf das Kraftfahrzeug einwirkenden Kräfte am Getriebeabtrieb dar. In der Ebene muß sie ohne äußere Last - z.B. Zuladung oder Anhängerbetrieb - gleich null sein. Ist sie es nicht, so läßt sich daraus eine erhöhte Fahrzeugmasse, eine Fahrbahn-Neigung und/oder eine äußere Last (Zuladung, Anhängerbetrieb usw.) erkennen. Analog dazu läßt sich ein Differenzmoment m__diff berechnen, das sich von der Differenzkraft *df* nur durch einen zusätzlichen Faktor unterscheidet (siehe hierzu auch die Ausführungen zur Fuzzy-Logik).

Eine mittlere Differenzkraft df__mittel ist ein Maß für die Fahrbahnsteigung oder -Neigung und/oder die Fahrzeugbeladung, und zwar als Mittelwert in einem Intervall z. Sie stellt den Mittelwert des Betrags der Differenzkraft *df* in diesem Zeitintervall z dar. Mit ihr ist es z.B. möglich, eine stark hügelige oder bergige Fahrstrecke und/oder eine erhöhte Fahrzeugbeladung zu erkennen und ein entsprechendes Verhalten des Getriebes mit einer Regelbasis RB__Last auch über eine längere Zeit zu gewährleisten. Damit wird beispielsweise nach einer langen Steigung ein lastadaptives Schaltkennfeld beibehalten, d.h. eine 4-5-Hochschaltung wird unterbunden. Damit steht dann der vierte Gang mit besserer Motorbremswirkung bei

5

der nachfolgenden Bergabfahrt zur Verfügung. Somit werden überflüssige 4-5- und 5-4-Schaltungen bei einer hügeligen Landstraße vermieden.

Anhand der mittleren Differenzkraft läßt sich auch das Befahren einer Paßstraße mit einer Regelbasis RB_Straße erkennen. Die Berechnung der mittleren Differenzkraft ist wie folgt:

df_mittel,n = $\Sigma$df,n - df_mittel,n-1) / p

hierin sind:

$\Sigma$df,n = k*|df| + $\Sigma$df,n-1 ,

k ein Normierungsfaktor zur Bewertung des Betrags der aktuellen Differenzkraft,
n der Berechnungszyklus und
p die Anzahl Berechnungszyklen, bis nach einer sprunghaften Änderung von |df| ein neuer Mittelwert erreicht ist (z.B. p = 256).

Analog dazu läßt sich ein mittlerer Betrag eines Differenzmomentes md_mittel, der bis auf einen konstanten Faktor der mittleren Differenzkraft df_mittel entspricht und der eine Aussage über ein andauerndes Vorhandensein von Steigungen und Gefällen enthält, verwenden (siehe auch die Ausführungen über die Fuzzy-Logik). Die Quantisierung erfolgt mit einem Schritt von 2 Nm.

Eine Fahrpedalaktivität ddk_mittel repräsentiert die Häufigkeit der Verstellung des Fahrpedals dk in einem Intervall z und sie wird wie folgt berechnet:

ddk_mittel,n = ($\Sigma$ddk_mittel,n - ddk_mittel,n-1) / p

wobei $\Sigma$ddk_mittel,n = k*|$\Delta$dk| + $\Sigma$ddk_mittel, n-1 ist.

Für **k**, **n** und **p** gilt gleiches wie oben. ddk stellt die Fahrpedal-Verstellgeschwindigkeit oder Fahrpedalaktivität dar.

Die vorstehenden Berechnungen der mittleren Differenzkraft und der Fahrpedalaktivität entsprechen einer vereinfachten gleitenden Mittelwertbildung.

Kann die Bremskraft von einem ABS-Steuergerät oder einem entsprechenden Sensor geliefert werden, so läßt sich nach vorstehender Gleichung ein aussagefähiger Wert für die Differenzkraft berechnen. Wird die Bremskraft nicht geliefert, so muß dies im Falle einer Bremsung berücksichtigt werden.

Die Raddrehzahlen werden wie erwähnt zum Berechnen der Querbeschleunigung und des Radschlupfes herangezogen. Dabei können bereits kleine Drehzahlunterschiede zu signifikanten Werten der berechneten Größen führen. Es ist deshalb notwendig, Fehlberechnungen durch Änderungen des Umfangs eines oder mehrerer Räder, z.B. durch einen Reifenwechsel oder durch das Anlegen von Schneeketten zu erkennen und zu korrigieren. Andernfalls würden z.B. Hochschaltungen bei erkannter Kurvenfahrt wegen großer Querbeschleunigung fehlerhafterweise gesperrt. Dies kann folgendermaßen vermieden werden: Nach einem Neustart des Getriebe-Steuergeräts 6, d.h. nach einem Einschalten der Zündung, muß die berechnete Querbeschleunigung für eine vorgegebene Zeit unter einem Grenzwert liegen, andernfalls wird sie für die Dauer des laufenden Betriebszyklus gleich null gesetzt.

Es wird dabei vorausgesetzt, daß ein Fahrer z.B. für zwei Minuten nach einem Neustart nicht sofort dauerhaft während dieser Zeitspanne mit hoher Querbeschleunigung mit konstantem Vorzeichen fährt. Tritt dagegen der Fall auf, daß die Querbeschleunigung nur kurz den Grenzwert überschreitet und dann wieder auf einen kleinen Wert abfällt, wird sie als plausibel betrachtet und für die Steuerung übernommen.

Die Ausgangssignale "last" und "fahrer" des Fuzzy-Rechner 23 und das zu einem Zeitpunkt t aktive Schaltkennfeld SKF(t) bestimmen das Schaltkennfeld zum nachfolgenden Zeitpunkt SKF(t+1). Dabei beträgt die Zykluszeit etwa 20 ms. Die in dem Kennfeldspeicher 24 abgelegten Schaltkennfelder sind aufeinander abgestimmt.

Im vorliegenden Ausführungsbeispiel existieren drei fahreradaptive Schaltkennfelder E ("economy"), M ("mittel") und S ("sport") und zwei lastadaptive Schaltkennfelder TA ("teiladaptiv") und A ("adaptiv"). Bei den fahreradaptiven Schaltkennfeldern erfolgen die Hochschaltungen bei von E über M nach S mit zunehmender Abtriebsdrehzahl nab. Das Schaltkennfeld TA umfaßt nur Schaltungen zwischen den Gängen 3, 4 und 5; die Schaltkennlinien für die Gänge 1 und 2 und von diesen nach 3 entstammen dem fahreradaptiven Schaltkennfeld, das durch das Ausgangssignal "fahrer" festgelegt wird, und zwar mit Ausnahme des Schaltkennfelds S, da dieses die Funktionalität von TA mit einschließt.

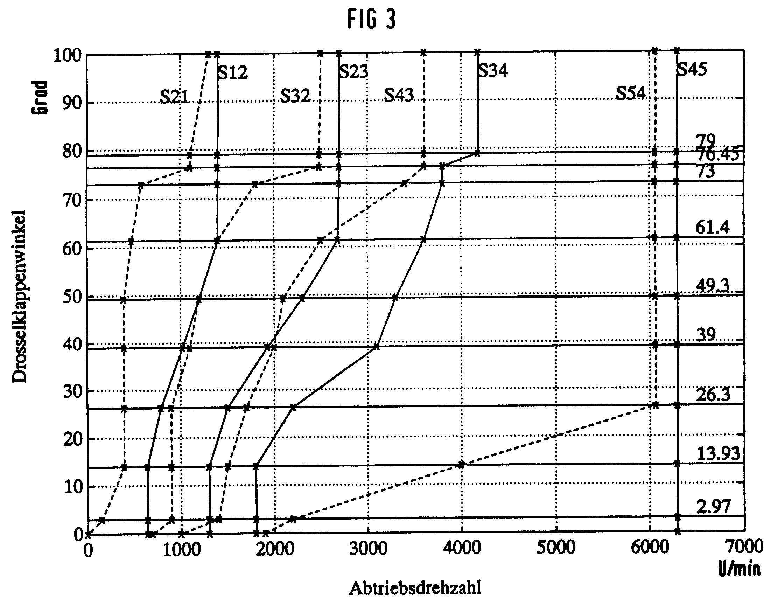

In Figur 3 ist als Beispiel das fahreradaptive Schaltkennfeld S dargestellt. Die Schaltkennlinie S12 verbindet die Wertepaare Abtriebsdrehzahl und Drosselklappenwinkel, bei denen eine Hochschaltung von dem ersten in den zweiten Gang durchgeführt wird. Entsprechend verbindet z.B. die Schaltkennlinie S54 die Wertepaare Abtriebsdrehzahl/Drosselklappenwinkel, bei denen eine Rückschaltung von dem fünften in den vierten Gang erfolgt. Gut erkennbar ist die Hysterese der Schaltkennlinien, die bewirkt, daß die Hochschaltung zwischen zwei bestimmten Gängen (z.B. 3-4) bei höheren Drehzahlen erfolgt als die Rückschaltung zwischen denselben Gängen.

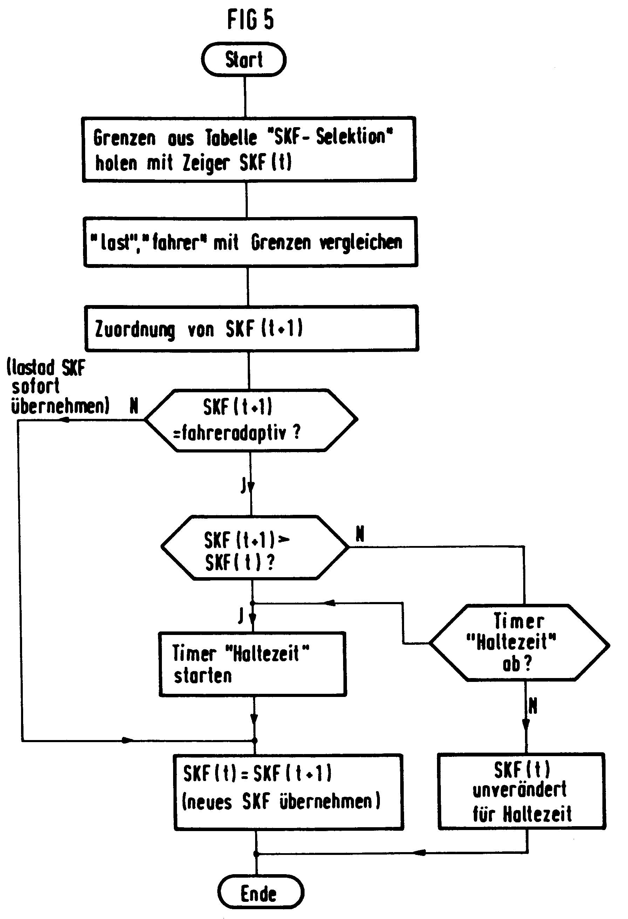

Ist ein fahreradaptives Schaltkennfeld gewechselt worden, so bleibt es eine vorgegebene Haltezeit unverändert aktiv, um häufige Schaltungen durch Schwankungen der genannten Auswahlsignale zu vermeiden. Allerdings setzt sich ein fahrleistungsorientiertes Schaltkennfeld immer sofort gegen ein ökonomischeres Schaltkennfeld durch, um z.B. bei einem Überholvorgang dem Fahrer sofort die erforderliche Beschleunigung durch geeignetes Schaltverhalten des Getriebes zur Verfügung zu stellen (siehe auch Fig. 5). Die Dauer der Haltezeit kann gangabhängig gemacht werden, um z.B. bei Autobahnfahrten ein einheitliches Schaltverhalten länger zu gewährleisten (z.B. mit längeren Haltezeiten in den Gängen vier und fünf). Auch kann die Dauer der Haltezeit von dem Verhalten des Fahrers abhängig gemacht werden, um z.B. bei sehr hoher Leistungsanforderung, d.h. bei großem Signal "fahrer" längere Haltezeiten bei einer Aktivierung des S-Schaltkennfeldes zu bewirken. Derartige Funktionalitäten sind aber abhängig von dem Motor, der Karosserie und dem Getriebe des jeweiligen Kraftfahrzeugtyps.

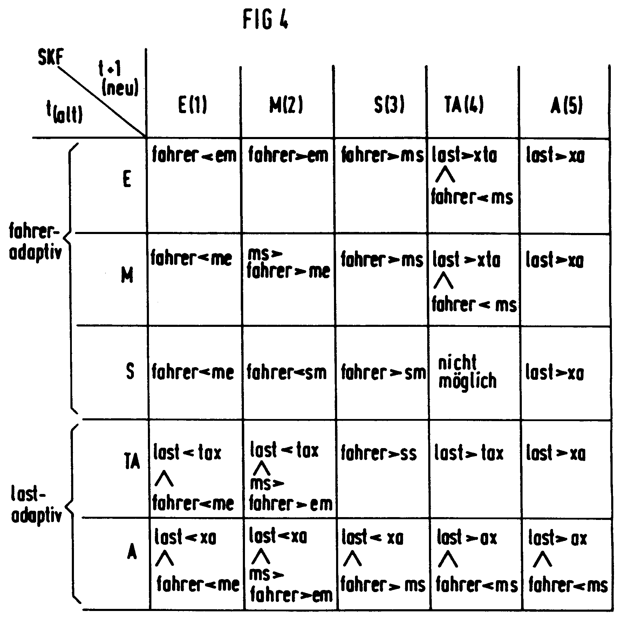

Die aus Figur 4 ersichtliche Matrix enthält die Bedingungen, die die Ausgangssignale "fahrer" und "last" des Fuzzy-Rechners 23 erfüllen müssen, um von einem "alten", d.h. zu einem Zeitpunkt t benutzten, Schaltkennfeld (linke Spalte) zu einem "neuen", in einem Zeitpunkt t+1 überzugehen. Die Größen em, ms, xta, xa, me, sm, tax und ax sind vorgebbare Grenzwerte für die beiden Signale. Das Zeichen $\wedge$ stellt eine UND-Verknüpfung dar.

Um z.B. von einem fahreradaptiven E-Schaltkennfeld zu einem lastadaptiven TA-Schaltkennfeld zu wechseln, muß das Signal "last" größer als ein Grenzwert xta und das Signal "fahrer" kleiner einem Grenzwert ms sein. Ein Wechsel von dem S-Schaltkennfeld zu dem TA-Schaltkennfeld wird nicht zugelassen, da das sportliche S-Schaltkennfeld auch die Bedingungen für das Befahren von Straßen mit mäßigen Steigungen, für die das teiladaptive Schaltkennfeld vorgesehen ist, erfüllt.

Es können einerseits mehr als fünf Schaltkennfelder mit jeweils feinerer Abstufung verwendet werden, die Ausgangssignale des Fuzzy-Rechners 23 können aber auch dazu eingesetzt werden, eines oder einige wenige Grundkennfelder zu verändern. Dazu werden mit dem Signal "fahrer" die Kennlinien verschoben und gegebenenfalls mit dem Signal "last" die Hysterese zwischen den Hoch- und den Rückschaltkennlinien verändert. Damit läßt sich die Anzahl erforderlicher Grundkennfelder und der Aufwand, einzelne Kennfelder zu selektieren, verringern.

Die Grenzwerte in der Matrix von Figur 4 werden in Fahrversuchen ermittelt. Sie müssen eine vorgegebene Hysterese zwischen dem Aktivieren und dem Verlassen eines Schaltkennfeldes aufweisen; so ist z.B. der Grenzwert em für den Wechsel von dem E- zu dem M-Schaltkennfeld größer als der Grenzwert me für die Rückkehr von dem M- zu dem E-Schaltkennfeld: em > me.

Außerdem können bei bestimmten Fahrmanövern, z.B. bei der Bergfahrt, die Aktivierungsgrenzwerte verändert werden, z.B. die für das S-Schaltkennfeld erhöht werden, weil das Signal "fahrer" bei der Bergfahrt schwächer bewertet werden muß.

Hier wird ein allgemeiner Vorteil der Fuzzy-Logik offenbar, nämlich, daß eine variable Bewertung der Eingangsgrößen vorgenommen wird, die unterschiedliche Schlußfolgerungen zuläßt. Hat zum Beispiel das Signal "fahrer" einen sehr großen Wert, so handelt es sich um eine kurzfristige Leistungsanforderung des Fahrers, z.B. beim Überholen. Diese quantitative Bewertung wird durch die Fuzzy-Logik vorgenommen und kann als solche besonders genutzt werden.

Die Matrix nach Figur 4 kann technisch durch einen Rechner mit entsprechendem Programm realisiert werden, das entsprechende Abfragen und Verzweigungen abarbeitet oder eine Tabelle aufweist, die abhängig von dem aktuellen Schaltkennfeld SKF (t) adressiert wird. Der Rechner entnimmt dann die Aktivierungsgrenzwerte und die Art des Vergleichs (">" oder "<" ) aus der Tabelle und legt das zu aktivierende neue Schaltkennfeld durch Vergleich der Signale "fahrer" und "last" mit den Grenzwerten aus der Tabelle fest. Aus Figur 5 ist das gesamte Ablaufdiagramm der dabei ausgeführten Operationen ersichtlich. Das Ablaufdiagramm ist selbsterklärend, die Operationen laufen wie folgt ab.

Die Getriebe-Steuerung 6 führt eine dynamische Schaltpunktkorrektur - mit Schaltungsunterdrückung durch Wechsel des Schaltkennfeldes - wie folgt durch. Anhand des aktiven Schaltkennfelds SKF(t) wird aus den Signalen dk und nab der neue Gang als Vorschlag ermittelt. Weicht dieser Vorschlag von dem aktuellen, hydraulisch eingelegten Gang ab, so wird daraufhin eine Schaltungsanforderung für eine Hoch- (HS) oder eine Rückschaltung (RS) erzeugt. Diese Schaltung wird jedoch nicht sofort als Schaltbefehl an das Getriebe weitergegeben, sondern ggf. um einige Zeit, dem sog. Verbotszeitraum unterdrückt. Dieser Verbotszeitraum kann solange dauern, daß der Schaltungsvorschlag wieder erlischt. Dies ist z.B. zweckmäßig, wenn bei einer Kurvenfahrt durch Aktionen des Fahrers am Fahrpedal (Signal dk) Schaltungsanforderungen erzeugt werden, deren Ausführung aber stören würde. Ein solches Fahrmanöver wird durch den Fuzzy-Rechner erkannt. Außerdem zeigen die von ihr mit dem Signal "schaltung" beim Hoch- oder Runterschalten erzeugten Schaltverbote an, wenn Schlupfzustände zwischen den Rädern und der Fahrbahn existieren. Dies verbessert die Fahrsicherheit im Grenzbereich der Fahrstabilität.

Das Inferenzsystem 29 gibt dazu eine Ausgangsvariable "schaltung" aus, die die Form **hs_verb** oder **rs_verb** hat und Hochschaltungen bzw. Rückschaltungen unterbindet. Sind Hochschaltungen oder Rückschaltungen erlaubt so hat die Ausgangsvariable die Form **hs_erl** bzw. **rs_erl**.

Es hat sich gezeigt, daß noch andere Schaltverbote notwendig sind, die von dem Fuzzy-Rechner nicht erkannt werden. So können Schaltungen, die durch den Wechsel des fahreradaptiven Schaltkennfeldes entstehen, als störend empfunden werden, weil sie nicht im Zusammenhang mit einer für den Fahrer erkennbaren Aktion oder Umweltbedingung stehen (sogenanntes unmotiviertes Schalten). In diesen Fällen erfolgt eine "Schaltungsunterdrückung durch Wechsel des Schaltkennfeldes", durch die solche Schaltungen solange unterdrückt werden, bis sie in Verbindung mit einem Fahrmanöver ausgeführt werden können, bei dem sie dem Fahrer plausibel erscheinen. Hiervon abweichend werden aber z.B. Rückschaltungen durch Wechsel auf ein lastadaptives Schaltkennfeld beim Anfahren an einem Berg oder Hochschaltungen durch Verlassen eines lastadaptiven Schaltkennfeldes erlaubt. Fahrmanöver, die eine Hochschaltung plausibel machen, sind z.B. eine Fahrzeugbeschleunigung (durch das Signal dnab eingeleitet) oder eine hohe Motordrehzahl (durch nmot).

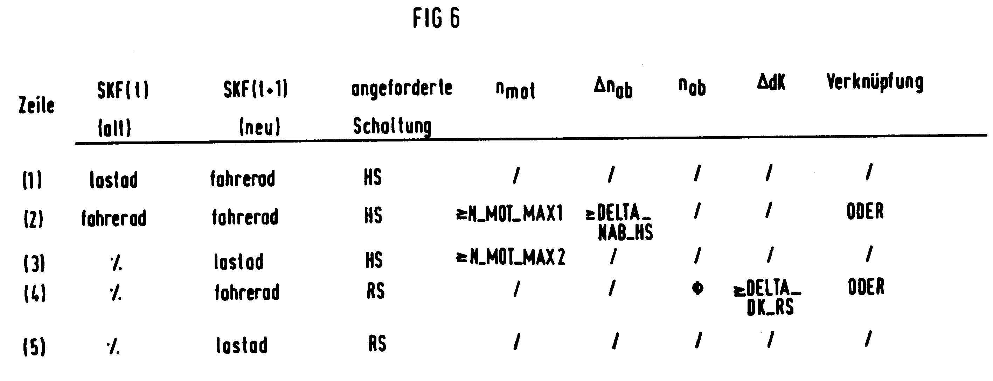

Eine weitere Vereinfachung und Verbesserung der vorstehend beschriebenen Funktionen wird dadurch erreicht, daß ein neuer Gang weiter mit dem bisherigen Schaltkennfeld SKF(t) berechnet und mit einem neuen Gang verglichen wird, der mit dem neuen Schaltkennfeld SKF(t+1) berechnet wird. Ergeben die beiden Schaltkennfelder den gleichen neuen Gang, so wird dieser und die damit verbundene Schaltung zugelassen. Es gibt aber Fälle, in denen dies nicht möglich ist. So wird z.B. in dem S-Schaltkennfeld der erste Gang benutzt, nicht aber in den E- und M-Schaltkennfeldern. Umgekehrt verhält es sich mit dem fünften Gang, der im S-Schaltkennfeld nicht verwendet wird (in diesem sorgt eine Overdrive-Charakteristik für eine Geräuschabsenkung und eine Minderung des Kraftstoffverbrauchs). Solche Schaltungen müssen, wenn sie nicht von der Fahrbahn (z.B. Anfahrt am Berg), dem Fahrzeug (Beschleunigung, Motordrehzahl) oder dem Fahrer (Niedertreten des Fahrpedals) gefordert, werden unterbunden werden. Treten andererseits die vorstehend genannten Bedingungen auf, so sind zugehörige Schaltungen für den Fahrer plausibel. Diese Fälle des Zulassens von "Schaltungen durch Wechsel des Schaltkennfeldes ausgelöst" sind in der Tabelle von Figur 6 zusammengefaßt.

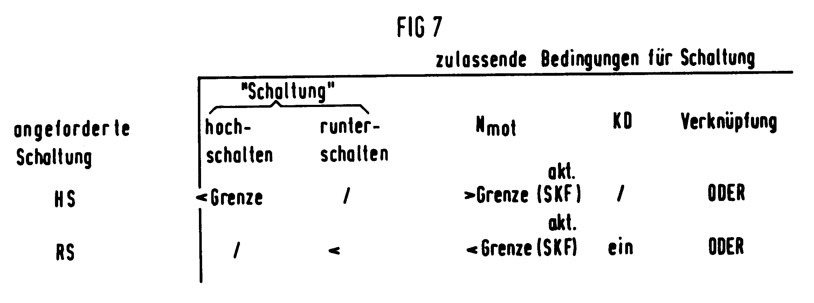

Die Tabelle der Figur 7 zeigt "scharfe" Motordrehzahlbedingungen, die Fuzzy-Schaltverbote aufheben. Sie sind notwendig, weil nicht alle Regeln der Fuzzy-Logik, die Schaltungen unterdrücken, die Motordrehzahl berücksichtigen.

Nach dem Erlöschen eines Fuzzy-Hochschaltverbots wird zusätzlich die (von dem Schaltkennfeld angeforderte) Hochschaltung noch eine Zeit gesperrt. Diese hängt von dem Fahrstil ab, sie wird z.B. in Form einer Kennlinie festgelegt. Damit wird bewirkt, daß bei leistungsorientierter Fahrweise (Überholen, kurvenreiche Strecke) erst hochgeschaltet wird, nachdem das Fahrpedal länger nicht betätigt worden ist, oder wenn das Fahrzeug auf einem geraden Streckenabschnitt fährt.

Die vorher erwähnten Fuzzy-Regelbasen enthalten die nachfolgend beschriebenen Regeln.

**Fuzzy-Regelbasis RB_Last**

Eine erste Regel dient der Schnellerfassung einer Bergfahrt.
RULE Schnellerf_Berg:
if ((m_diff is pos) and (dk is not_s)) and (nab is not_low)
    then last = berg    (RL1)
Eine zweite Regel bewirkt das Halten eines lastadaptiven Schaltkennfelds oder eine entsprechende dauerhafte Verschiebung der Schaltpunkte.
RULE Adap_halten:
if (m_diff is pos) or (md_mittel is high)
    then last = berg    (RL2)
Diese Regel wird nur wirksam, wenn das Fahrzeug nicht mehr als 120 km/h fährt.
Eine dritte Regel, die immer wirksam ist, ist für den Wert des Ausgangssignals "last" allein maßgeblich, wenn keine andere Regel gleichzeitig wirksam ist.
RULE Last_balance:
if m_diff is any

then last = ebene (RL3)


**Fuzzy-Regelbasis RB__Fahrer**

Eine nullte Regel dient einer ersten schnellen Ermittlung eines großen Wertes des Ausgangssignals "fahrer".

RULE Schnellerf__high:

if (ddk is phigh) and (dk is gr__m)

    then fahrer = high (RF0)

Eine erste Regel dient einer weiteren Schnellerfassung des Fahrverhaltens oder -stils des Fahrers. Wenn das Ausgangssignal "fahrer" einen großen Wert (high) aufweist, dann fordert der Fahrer hohe Leistung an. Ist der Wert niedrig (low), dann wird wenig Leistung von ihm angefordert.

RULE Schnellerf1__high:

if (dk is ll) and (nab is not high)

    then fahrer = high (RF1)

Eine zweite Regel dient der Langzleiterfassung eines mittleren Wertes des Ausgangssignals "fahrer".

RULE Langzeiterf__med:

if ddk__mittel is m

    then fahrer = med (RF2)

Eine dritte Regel dient dazu, über einen mittleren Zeitraum einen mittelgroßen Wert des Ausgangssignals "fahrer" festzulegen.

RULE Mittelzeit__med:

if (dk is l) and (dk __mittel is high)

    then fahrer = med (RF3)

Eine vierte Regel wird auch hier allein wirksam, wenn keine der anderen Regeln wirksam ist.

RULE Balance:

if ddk__mittel is any

    then fahrer = low (RF4)


**Fuzzy-Regelbasis RB__Schaltung**

Eine nullte Regel sorgt dafür, daß im Schubbetrieb des Kraftfahrzeugs oder wenn der Fahrer den Fuß vom Fahrpedal nimmt keine Hochschaltungen durchgeführt werden.

RULE no__schub__hs:

if (((dk is ss) and (nmot is low)) and (nab is not low)) or ddk is less__nmed)

    then schaltung = hs__verb (RS0)

Eine erste Regel bewirkt beim Gasgeben bei kleiner Motordrehzahl und mit kleiner Gaspedal-Verstellgeschwindigkeit ebenfalls ein Hochschaltverbot.

RULE hs__ddk__verbot:

if (ddk is gr__plow) and (nmot is low)

    then schaltung = hs__verb (RS1)

Eine zweite Regel verhindert ein Hochschalten in Kurven.

RULE hs__kurven__verbot:

if ((ay is big) and (nmot is low)) or (day is p)

    then schaltung = hs__verb (RS2)

Eine dritte und eine vierte Regel werden beim Hochschalten und beim Rückschalten wirksam, wenn sonst keine andere Regel wirksam ist.

RULE balance__hs:

if ay is any

    then schaltung = hs__erl (RS3)

RULE balance__rs:

if ay is any

    then schaltung = rs__erl (RS4)

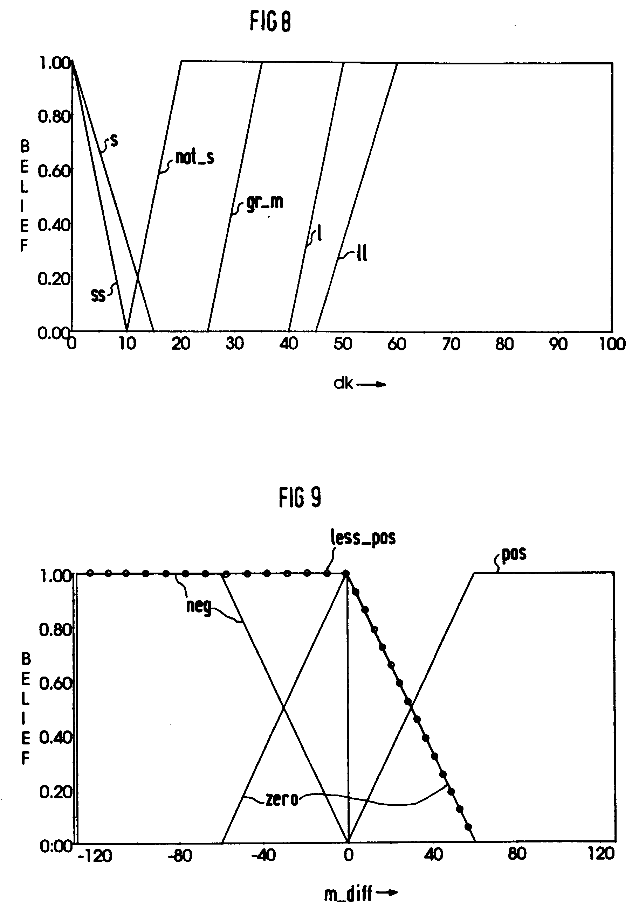

Zugehörigkeitsfunktionen von Fuzzy-Variablen, die in den beschriebenen Regelbasen verwendet werden sind in den Figuren 8 bis 10 exemplarisch dargestellt. Die Werte der einzelnen Zugehörigkeiten hängen von dem jeweiligen Fahrzeugtyp ab, sie werden teilweise empirisch ermittelt. In Figur 8 sind die Zugehörigkeitsgrade BELIEF - sonst auch als $\mu$ bezeichnet - folgender Mengen über den Werten der Drosselklappenstellung dk dargestellt:

| | |
|---|---|
| ss | sehr klein (small small) |
| s | klein (small) |
| not__s | nicht klein (not small) |
| gr__m | mittel (great medium) |
| l | groß (large) |
| ll | sehr groß (large large) |

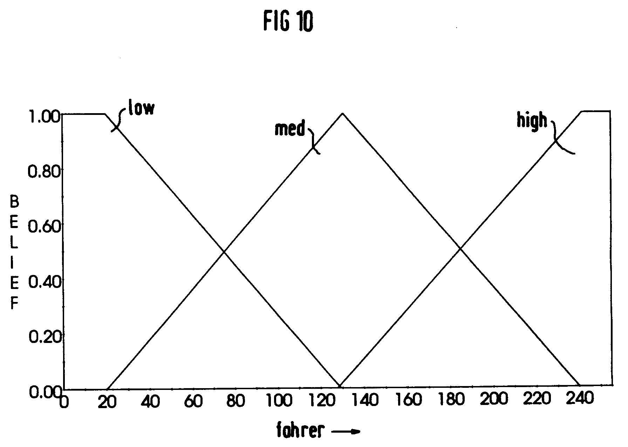

In Figur 9 sind die Zugehörigkeitsfunktionen des Differenzmomentes m__diff, d.h. die Zugehörigkeitsgrade der Werte des Differenzmoments zu folgenden Mengen dargestellt:

| | |
|---|---|
| neg | negativ |
| zero | null |
| less__pos | positiv klein |
| pos | positiv |

Die Zugehörigkeitsfunktionen der Figuren 8 und 9 stellen echte funktionale Zusammenhänge zwischen einem Wert einer Fuzzy-Größe (Abszisse) und dem Zugehörigkeitsgrad zu einer Menge (Ordinate) dar. In Figur 10 ist das Ergebnis einer Inferenz, d.h. die Zusammenfassung der auf eine Fuzzy-Variable angewendeten Regeln einer Regelbasis dargestellt. Die Zugehörigkeiten der Werte des Signals "fahrer" zu folgenden Mengen low (niedrig), med (mittel) und high (groß) sind liegen hier in Form von drei Flächen vor.

Bekannt sind verschiedene bewährte Inferenz-Verfahren, die alle angewendet werden können. Im Ausführungsbeispiel ist das sog. max-dot-Inferenz-Verfahren verwendet worden, bei dem die Fläche unter der Zugehörigkeitsfunktion eines Ausgangssignals von dem Erfülltheitsgrad der jeweiligen Regeln abhängt. Damit werden einzelne Schlußfolgerungen mit ihrem jeweiligen Erfülltheitsgrad gewichtet.

In bekannter Weise wird dann die resultierende Gesamtfläche gebildet. Der Schwerpunkt dieser Fläche repräsentiert schließlich mit der x-Koordinate des Flächenschwerpunkts die Stellgröße und damit das Ausgangssignal des Fuzzy-Rechners 23.

Aus den vorstehend beschriebenen "balance"-Regeln ergibt sich, daß d Zugehörigkeitsfläche low (Figur 10) immer wirksam ist. Ist nur diese Regel wirksam, so hat das Signal "fahrer" einen Wert von 44, der der x-Koordinate des entsprechenden Flächenschwerpunkts entspricht. Wert des Signals "fahrer" von 44 bis 130 charakterisieren einen ökonomischen bis leistungsorientierten Fahrstil, während über 130 liegende Werte einen sportlichen Fahrstil charakterisieren. Wenn die Zugehöri keit fahrer = high zu 100 % zutrifft, dann liegt die x-Koordinate de Flächenschwerpunkts und damit der Wert des Ausgangssignals "fahrer" bei 130.

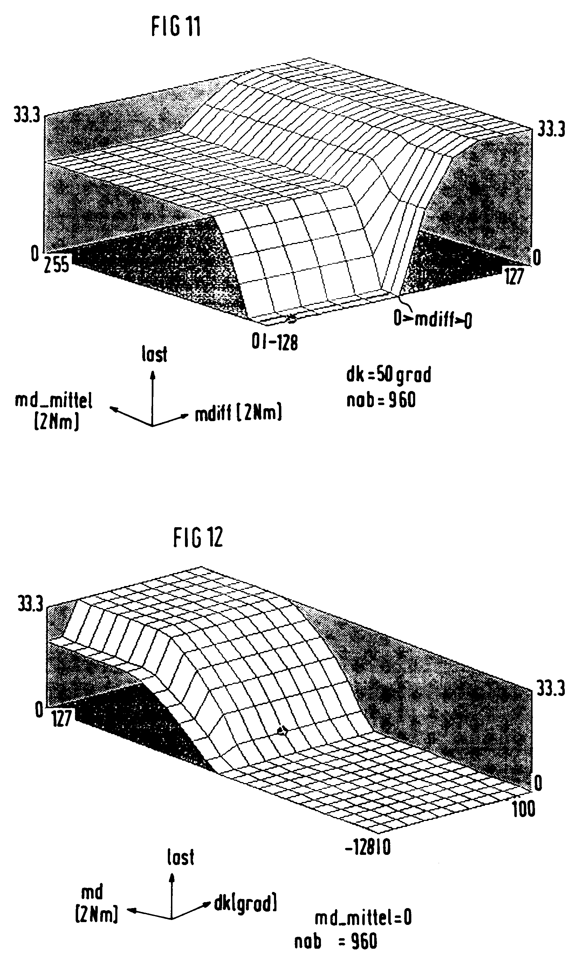

Bei den aus den Figuren 11 bis 13 ersichtlichen kennfeldartigen Darstellungen der Auswirkungen der Fuzzy-Logik, die in dem Fuzzy-Rechner 23 realisiert ist, sind, da jeweils nur drei Größen dargestellt werden können, die anderen Größen konstant gehalten. Die jeweils veränderlichen Größen und das sich daraus ergebende Ausgangssignal sind jeweils in einer kleinen Skizze unterhalb der jeweiligen Darstellung angedeutet. Die jeweilige Maßeinheit der Darstellung ist in eckigen Klammern angefügt.

Figur 11 zeigt die Abhängigkeit des Ausgangssignals "last" von dem mittleren Differenzmoment m__diff und von dem mittleren Differenzmoment md__mittel. Konstant gehalten sind die Getriebeabtriebsdrehzahl nab und die Drosselklappenstellung dk: die jeweiligen Werte sind aus der Figur ersichtlich. Es sind hier die Regeln "Schnellerf_Berg" und "Adap_halten" wirksam. Bei m__diff > 0 ist die Regel "Schnellerf_Berg" wirksam, bei Anfahren an einer Bergstrecke ist das mittlere Differenzmoment md_mittel noch gleich 0 und damit die Regel "Adap_halten" noch unwirksam. Wird eine längere Steigung befahren, so steigt das mittlere Differenzmoment an und die Regel "Adap_halten" (d.h. Halten eines adativen Schaltkennfelds) wird zunehmend wirksam. Das hat eine Anhebung des Ausgangssignals "last" zur Folge, auch wenn die Regel "Schnellerf_Berg" nicht mehr (ganz) wirksam ist. Dies trifft auch bei Bergabfahrt zu. Vorteil dieser Regeln ist, daß ein an Bergauf- und Bergabfahrten angepaßtes Verhalten der Steuerung 6 durch den Fuzzy-Rechner 23 erreicht wird.

In Figur 12 ist das Ausgangssignal "last" in Abhängigkeit von dem Differenzmoment m__diff und der Drosselklappenstellung dk dargestellt. Dabei sind das mittlere Differenzmoment md__mittel = 0 und die Getriebe-Abtriebsdrehzahl nab = 960 min$^{-1}$ konstant gehalten. Es sind hier die Fuzzy-Regeln "Schnellerf_Berg" und "Adap_halten" wirksam. Um ein an eine Bergfahrt angepaßtes Schaltverhalten oder allgemeiner eine daran angepaßte Übersetzung zu erhalten, muß zusätzlich zu der Bewertung des Differenzmomentes bei kleinen Werten von m__diff eine Leistungsanforderung des Fahrers als ein signifikanter Wert der Drosselklapppenstellung dk vorliegen. Bei einem Befahren von leichten Steigungen oder kleinen Hügeln mit Schwung (mit kleinem Wert von dk) werden somit keine Veränderungen des Schaltverhaltens bewirkt.

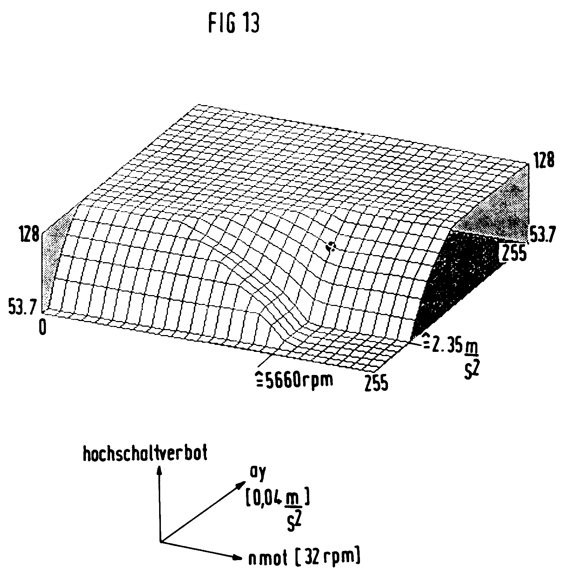

In Figur 13 ist das Ausgangssignal "hochschaltverbot" in Abhängigkeit von der Fahrzeug-Querbeschleunigung ay und der Motordrehzahl nmot dargestellt. Es sind hier eine Fuzzy-Regel "hs__kurven__verb 0" bis zu einer Motordrehzahl nmot = 5660 $min^{-1}$ und eine Fuzzy-Regel "hs_kurven_verb 1" ab einer Querbeschleunigung von 2,35 $m/s^2$ wirksam. Beide Regeln bewirken unter vorgegebenen Voraussetzungen, daß in einer Kurve nicht hochgeschaltet wird.

Unter der Voraussetzung, daß ein Hochschaltverbot ab einem Wert hochschaltverbot = 100 wirksam ist, so ergänzen sich diese beiden Regeln folgendermaßen. Bei kleineren Querbeschleunigungen existiert eine Motordrehzahlgrenze, ab der das Ausgangssignal hochschaltverbot < 100 ist, d.h. es darf hochgeschaltet werden (Regel hs_kurven_verb 0). Ist die Querbeschleunigung ay "sehr groß" (Regel hs__kurven__verb 1), so wird unabhängig von der Motordrehzahl eine Hochschaltung unterbunden (z.B. bei 5 $m/s^2$). Dazwischen existiert ein Bereich, bei dem das Ausgangssignal "hochschalten" von der Querbeschleunigung und der Motordrehzahl abhängt, und zwar in dem Sinne, daß bei größerer Querbeschleunigung zunehmend größere Motordrehzahlgrenzen gegeben sind, unterhalb deren keine Hochschaltung zugelassen wird.

Die Erfindung ermöglicht es, beim Festlegen einer Stellgröße für beliebige Steuergeräte in einem Kraftfahrzeug, sämtliche fahrdynamischen Einflußgrößen (Fahr- und Belastungssituation des Kraftfahrzeugs, Fahrverhalten des Fahrers, Straßentyp usw.) mit wenig Aufwand präzise zu berücksichtigen.

**Patentansprüche**

1. Steuerung (6) für eine Einrichtung in einem Kraftfahrzeug, insbesondere für ein automatisches Getriebe (5), durch welche in Abhängigkeit von der Fahrpedalstellung (dk), von der Fahrzeuggeschwindigkeit (nab) und gfs. weiterer Meßgrößen eine Stellgröße für die zu steuernde Einrichtung festgelegt wird, **dadurch gekennzeichnet,** daß sie einen mehrere Regelbasen (RB_Fahrer, RB_Last, RB_Schaltung) enthaltenden Fuzzy-Rechner (23) aufweist, dem die Meßgrößen (dk, nab) und von diesen abgeleitete Parameter (ddk, dk_mittel, ddk_mittel) als Eingangsgrößen zugeführt werden und durch den anhand einer Auswertung der Meßgrößen und Parameter nach Regeln der Fuzzy-Logik Ausgangsvariablen (last, schaltung) erzeugt werden, durch die bei der Festlegung der Stellgröße der jeweilige Fahr- und Lastzustand des Kraftfahrzeugs berücksichtigt werden.

2. Steuerung nach Anspruch 1, dadurch gekennzeichnet, daß dem Fuzzy-Rechner (23) als weitere Eingangsgrößen die Fahrpedalaktivität (ddk), der Mittelwert der Fahrpedalaktivität (ddk_mittel) und der Mittelwert der Fahrpedalstellung (dk_mittel) zugeführt werden und daß damit von ihr eine das Fahrverhalten des Fahrers charakterisierende Ausgangsvariable fahrer) erzeugt wird.

3. Steuerung nach Anspruch 1, dadurch gekennzeichnet, daß dem Fuzzy-Rechner (23) als weitere Eingangsgrößen ein Differenzmoment (m_diff) oder eine Differenzkraft (df) und den gemittelten Betrag des Differenzmoments (md_mittel) oder der Differenzkraft (df_mittel) zugeführt werden.

4. Steuerung nach Anspruch 1, dadurch gekennzeichnet, daß dem Fuzzy-Rechner (23) als weitere Eingangsgrößen die Motordrehzahl (nmot), die Fahrzeug-Querbeschleunigung (ay) und die Änderung der Querbeschleunigung (day) zugeführt werden und daß damit durch ihn eine Veränderungen der Stellgröße freigebende oder unterbindende Ausgangsvariable (hs_erl, hs_verb; rs-erl, rs_verb) erzeugt wird.

5. Steuerung nach Anspruch 1, dadurch gekennzeichnet, daß sie eine Signalaufbereitungsschaltung (22) aufweist, durch welche ein Signal (dk), das die Fahrpedal- oder Drosselklappenstellung wiedergibt, über eine vorgegebene Zeitspanne gemittelt wird.

6. Steuerung nach Anspruch 5, dadurch gekennzeichnet, daß durch die Signalaufbereitungsschaltung (22) die Differenz von jeweils zwei Signalen (ay), die in aufeinanderfolgenden Zeitintervallen die Querbeschleunigung des Kraftfahrzeuges wiedergeben, gebildet und zur Erkennung des Beginns einer Kurvenfahrt verwendet wird.

7. Steuerung nach Anspruch 5, dadurch gekennzeichnet, daß durch die Signalaufbereitungsschaltung (22) die Häufigkeit der Verstellung des Fahrpedals (ddk) während eines vorgegebenen Zeitintervalls (z) ermittelt und zur Bewertung des Fahrverhaltens des Fahrers verwendet wird.

8. Steuerung nach Anspruch 5, dadurch gekennzeichnet, daß durch die Signalaufbereitungsschaltung (22) der Betrag der Differenz (ΔF) aus der Antriebs- und Bremskraft sowie den Fahrwiderständen des Kraftfahrzeugs in der Ebene gebildet und über eine vorgegebene Zeitspanne gemittelt wird, und daß aus dem erhaltenen Mittelwert der Fahrbahntyp und die Beladung des Kraftfahrzeugs ermittelt werden.

9. Steuerung nach Anspruch 1, dadurch gekennzeichnet, daß durch den Fuzzy-Rechner (23) bei der Steuerung eines Getriebes (5) ein Schaltkennfeld (SKF) in Abhängigkeit von dem jeweils vorherigen Schaltkennfeld, dem das Fahrverhalten des Fahrers charakterisierenden ersten Ausgangssignal (fahrer) und dem den Lastzustand des Kraftfahrzeugs (last) charakterisierenden zweiten Ausgangssignal festgelegt oder verändert wird.

10. Steuerung nach Anspruch 9, dadurch gekennzeichnet, daß sie eine Kennfeld-Auswahlschaltung aufweist, in der vorgegebene Grenzwerte (em, me, ms, sm, ax, xa, xta) für das erste und das zweite Auswahlsignal abgelegt sind, und daß diese Grenzwerte für das Auswählen oder Verändern von Schaltkennfeldern maßgeblich sind.

11. Steuerung nach Anspruch 1, dadurch gekennzeichnet, daß durch ein das Fahrverhalten des Fahrers charakterisierendes erstes Ausgangssignal (fahrer) und ein den Lastzustand des Kraftfahrzeugs charakterisierendes zweites Ausgangssignal (last) das oder die zum Steuern der Übersetzung des Getriebes verwendete Kennfeld bzw. Kennlinie ausgewählt oder verändert werden.

FIG 1

EP 0 638 742 A1

Fuzzifizierung

dk

Signalaufbereitung

dk

ddk

nab

df-
mittel

nmot

df

dk_
mittel

ay

Sx

day

ddk_
mittel

dk

nab

nt

mmot

nmot

nrad 1-4

Schlupfzustände

Drosselklappe

Änderung
Drosselkl.

Abtriebsdrehzahl

mittl. Differenzkraft

Motordrehzahl

Differenzkraft

Fahrpedal-
Mittelwert

Querbeschl.

Längsschlupf

Änderung-
Querbeschl.

Fahrpedalaktivität

Fuzzy-Regelbasis mit
Inferenzsystem

Defuzzifizierung

last

fahrer

schaltung

Schaltkennfeld
(SKF)-
Auswahl

Schaltungsablaufsteuerung

dk

2-1 1-2 3-2 2-3
4-3
3-4

SKF    1...n

n_ab

Auswahl

Gang_neu

Fuzzy-Logik

22

28

29

30

23

25

32

33

24

26

19

Gang
(zu Getriebe5)

FIG 2

# FIG 3

EP 0 638 742 A1

# FIG 4

| SKF t+1 (neu) / t(alt) | E(1) | M(2) | S(3) | TA(4) | A(5) |
|---|---|---|---|---|---|
| **fahrer-adaptiv** E | fahrer<em | fahrer>em | fahrer>ms | last>xta ∧ fahrer<ms | last>xa |
| **fahrer-adaptiv** M | fahrer<me | ms> fahrer>me | fahrer>ms | last>xta ∧ fahrer<ms | last>xa |
| **fahrer-adaptiv** S | fahrer<me | fahrer<sm | fahrer>sm | nicht möglich | last>xa |
| **last-adaptiv** TA | last<tax ∧ fahrer<me | last<tax ∧ ms> fahrer>em | fahrer>ss | last>tax | last>xa |
| **last-adaptiv** A | last<xa ∧ fahrer<me | last<xa ∧ ms> fahrer>em | last<xa ∧ fahrer>ms | last>ax ∧ fahrer<ms | last>ax ∧ fahrer<ms |

# FIG 5

```
                        ( Start )
                            │
        ┌───────────────────────────────────────┐
        │ Grenzen aus Tabelle "SKF- Selektion"   │
        │ holen mit Zeiger SKF (t)                │
        └───────────────────────────────────────┘
                            │
        ┌───────────────────────────────────────┐
        │ "last","fahrer" mit Grenzen vergleichen │
        └───────────────────────────────────────┘
                            │
        ┌───────────────────────────────────────┐
        │ Zuordnung von SKF (t+1)                │
        └───────────────────────────────────────┘
                            │
  (lastad SKF
   sofort            N      ⬡ SKF (t+1)
   übernehmen) ◄───────────  =fahreradaptiv ?
                            │ J
                            ▼
                     ⬡ SKF (t+1) >        N
                       SKF (t) ?  ─────────────┐
                            │ J                │
                            ▼                  ▼
        ┌───────────────────┐          ⬡ Timer
        │ Timer "Haltezeit" │            "Haltezeit"
        │ starten           │            ab ?
        └───────────────────┘               │ N
                            │                │
  ┌─────────────────────────┐     ┌──────────────────┐
  │ SKF (t) = SKF (t+1)     │     │ SKF (t)          │
  │ (neues SKF übernehmen)  │     │ unverändert      │
  └─────────────────────────┘     │ für Haltezeit    │
                            │      └──────────────────┘
                            ▼
                        ( Ende )
```

## FIG 6

| Zeile | SKF(t) (alt) | SKF(t+1) (neu) | angeforderte Schaltung | $n_{mot}$ | $\Delta n_{ab}$ | $n_{ab}$ | $\Delta dK$ | Verknüpfung |
|---|---|---|---|---|---|---|---|---|
| (1) | lastad | fahrerad | HS | / | / | / | / | / |
| (2) | fahrerad | fahrerad | HS | $\geq$ N_MOT_MAX1 | $\geq$ DELTA_NAB_HS | / | / | ODER |
| (3) | ·/. | lastad | HS | $\geq$ N_MOT_MAX2 | / | / | / | / |
| (4) | ·/. | fahrerad | RS | / | / | $\Phi$ | $\geq$ DELTA_DK_RS | ODER |
| (5) | ·/. | lastad | RS | / | / | / | / | / |

## FIG 7

EP 0 638 742 A1

zulassende  Bedingungen für Schaltung

| angeforderte Schaltung | "Schaltung" | | Nmot | KD | Verknüpfung |
|---|---|---|---|---|---|
| | hoch-schalten | runter-schalten | | | |
| HS | <Grenze | / | akt.<br>>Grenze (SKF) | / | ODER |
| RS | / | < | akt.<br><Grenze (SKF) | ein | ODER |

## FIG 8

## FIG 9

# FIG 10

FIG 11

33.3                                                                33.3

0                                                                    0
255                                                              127

0>mdiff>0

0 I-128

last

md_mittel
[2Nm]          mdiff [2Nm]

dk = 50 grad
nab = 960

FIG 12

33.3

33.3

0
127                                                                  0
                                                                     100

-12810

last

md
[2Nm]          dk(grad)

md_mittel = 0
nab   = 960

# FIG 13

128

53.7

128

255

53.7

0

$\hat{=}2.35\dfrac{m}{s^2}$

$\hat{=}5660\,rpm$

255

255

hochschaltverbot

ay
$[0,04\dfrac{m}{s^2}]$

nmot [ 32 rpm]

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 531 154 (HONDA GIKEN KOGYO KABUSHIKI KAISHA) | 1,9-11 | F16H61/02 B60K41/28 |
| A | * Spalte 6, Zeile 10 - Zeile 26 * <br> * Spalte 8, Zeile 30 - Spalte 9, Zeile 56 * <br> * Spalte 12, Zeile 50 - Spalte 13, Zeile 29; Ansprüche 1-9; Abbildungen 3,4,16,17 * <br> --- | 2,3,5-8 | |
| X | EP-A-0 503 948 (MITSUBISHI JIDOSHA KOGYO KABUSHIKI KAISHA) <br> * Seite 10, Zeile 10 - Zeile 40 * <br> * Seite 11, Zeile 12 - Zeile 42; Ansprüche 1,4,7,8,11-14; Tabellen 2,7 * <br> --- | 1,4-6,8 | |
| X | EP-A-0 532 363 (HONDA GIKEN KOGYO KABUSHIKI KAISHA) | 1,3 | |
| A | * Spalte 4, Zeile 49 - Spalte 7, Zeile 15; Anspruch 1; Abbildungen 3-8 * <br> --- | 2,5-8,10 | |
| A | EP-A-0 377 953 (HONDA GIKEN KOGYO KABUSHIKI KAISHA) <br> * Spalte 3, Zeile 42 - Zeile 57 * <br> * Spalte 11, Zeile 9 - Zeile 37 * <br> * Spalte 25, Zeile 35 - Spalte 28, Zeile 9; Anspruch 1; Abbildung 4 * <br> --- | 1,2 | RECHERCHIERTE SACHGEBIETE (Int.Cl.6) <br><br> F16H <br> B60K |
| E | EP-A-0 559 255 (SATURN CORPORATION) <br> * Ansprüche 1,7,8 * <br> ----- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 3. Januar 1994 | Bufacchi, B |